(19)

Europäisches Patentamt
European Patent Office
Office européen des brevets

(11) **EP 3 331 065 B1**

(12) **EUROPEAN PATENT SPECIFICATION**

(45) Date of publication and mention
of the grant of the patent:
**24.07.2019 Bulletin 2019/30**

(21) Application number: **17204480.2**

(22) Date of filing: **29.11.2017**

(51) Int Cl.:
$H01M\ 4/131^{(2010.01)}$     $H01M\ 4/1391^{(2010.01)}$
$H01M\ 4/525^{(2010.01)}$     $H01M\ 10/0525^{(2010.01)}$
$H01M\ 10/052^{(2010.01)}$     $H01M\ 4/02^{(2006.01)}$

(54) **NICKEL-BASED ACTIVE MATERIAL FOR LITHIUM SECONDARY BATTERY, METHOD OF PREPARING NICKEL-BASED ACTIVE MATERIAL, AND LITHIUM SECONDARY BATTERY INCLUDING POSITIVE ELECTRODE INCLUDING NICKEL-BASED ACTIVE MATERIAL**

NICKELBASIERTES AKTIVMATERIAL FÜR LITHIUMSEKUNDÄRBATTERIE, VERFAHREN ZUR HERSTELLUNG VON NICKELBASIERTEM AKTIVMATERIAL UND LITHIUMSEKUNDÄRBATTERIE MIT POSITIVELEKTRODE MIT DEM NICKELBASIERTEN AKTIVMATERIAL

MATÉRIAU ACTIF À BASE DE NICKEL POUR BATTERIE SECONDAIRE AU LITHIUM, SON PROCÉDÉ DE PRÉPARATION ET BATTERIE SECONDAIRE AU LITHIUM COMPRENANT UNE ÉLECTRODE POSITIVE L'INCORPORANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2016 KR 20160161955**

(43) Date of publication of application:
**06.06.2018 Bulletin 2018/23**

(73) Proprietor: **Samsung SDI Co., Ltd.**
**Gyeonggi-do (KR)**

(72) Inventors:
• **KIM Jiyoon**
**Gyeonggi-do (KR)**

• **KIM Jongmin**
**Gyeonggi-do (KR)**
• **SHIM Jaehyun**
**Gyeonggi-do (KR)**
• **CHANG Donggyu**
**Gyeonggi-do (KR)**

(74) Representative: **Mounteney, Simon James**
**Marks & Clerk LLP**
**15 Fetter Lane**
**London EC4A 1BW (GB)**

(56) References cited:
**EP-A1- 3 007 254**     **US-A1- 2012 270 107**
**US-A1- 2016 181 597**

**Description**

BACKGROUND

1. Field

One or more embodiments relate to a nickel-based active material for a lithium secondary battery, a method of preparing the nickel-based active material, and a lithium secondary battery including a positive electrode including the nickel-based active material.

2. Description of the Related Art

According to development of portable electronic devices and communication devices, there is a high need for development of lithium secondary batteries having a high energy density.

Examples of a positive electrode active material of a lithium secondary battery may include a lithium nickel manganese cobalt composite oxide and a lithium cobalt oxide. When the positive electrode active material is used, long life of the lithium secondary battery is deteriorated due to the crack generated in the positive electrode active material as a charging and discharging process is repeated, the resistance is increased, and capacity characteristics of the battery may not reach to satisfactory levels. Therefore improvements in these regards are required.

US 2016/181597 A1 relates to an anode active material for a lithium secondary battery in which the lithium ion diffusion paths in the primary particles and secondary particles of the anode active material have a layered structure and are formed to exhibit directivity in a specific direction.

US 2012/270107 A1 relates to nickel cobalt manganese composite hydroxide particles and methods for producing them.

EP 3 007 254 A1 relates to transition metal composite hydroxide particles and methods for producing them.

SUMMARY

According to one or more embodiments, a nickel-based active material for a lithium secondary battery includes a secondary particle including an agglomerate of at least two plate primary particles, wherein at least a part of the secondary particle has a structure in which the plate primary particles are arranged radially, and a porosity of an exterior portion of the secondary particle is greater than that of an interior portion of the secondary particle. A porosity of the exterior portion of the secondary particle is in a range of 5% to 30%, and the exterior portion of the secondary particle is a region of about 40 length% from a surface of the secondary particle based on the total distance from a center to the surface of the secondary particle.

According to one or more embodiments, a method of preparing a nickel-based active material for a lithium secondary battery includes low-temperature heat-treating a mixture of a lithium precursor and a metal hydroxide under an oxidative gas atmosphere at a temperature in a range of about 650°C to about 800°C; and high-temperature heat-treating the low-temperature heat-treated mixture at a temperature in a range of about 800°C to 1000°C to prepare the nickel-based active material.

According to one or more embodiments, a lithium secondary battery includes a positive electrode including the nickel-based active material; a negative electrode; and an electrolyte between the positive electrode and the negative electrode.

At least some of the above and other features of the present invention are set out in the claims.

BRIEF DESCRIPTION OF THE DRAWINGS

FIG. 1A is a schematic view that shows shapes of a plate primary particle;

FIG. 1B is a view that illustrates a definition of a radial arrangement in a secondary particle of a nickel-based active material for a lithium secondary battery, according to an embodiment;

FIG. 1C is a cross-sectional view of the nickel-based active material for a lithium secondary battery, according to an embodiment;

FIG. 2 is a schematic view of a structure of a lithium secondary battery including a positive electrode including the nickel-based active material for a lithium secondary battery, according to an embodiment;

FIGS. 3A and 3B are scanning electron microscope (SEM) images of a nickel-based active material for a lithium secondary battery prepared in Example 1;

FIGS. 4A and 4B are SEM images of a nickel-based active material prepared in Comparative Example 1;

FIGS. 5A and 5B are SEM images of a nickel-based active material prepared in Comparative Example 2; and FIG. 6 is a graph that shows changes in capacity retention rates (%) according to the number of cycles in coin-cells prepared in Example 5 and Comparative Example 3.

## DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

The advantages and features of one or more embodiments, and methods for achieving these, will become apparent with reference to examples described in detail with reference to the accompanying drawings. This inventive concept may, however, be embodied in many different forms and should not be construed as limited to the embodiments set forth herein. These embodiments are provided so that this disclosure will fully convey the inventive concept to one of ordinary skill in the art.

The terms used in the present specification are merely used to describe particular embodiments, and are not intended to limit the inventive concept. An expression used in the singular encompasses the expression of the plural, unless it has a clearly different meaning in the context. In the present specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added. While such terms as "first," "second," etc., may be used to describe various components, such components must not be limited to the above terms. The above terms are used only to distinguish one component from another.

Hereinafter, with reference to the accompanying drawings, a nickel-based active material for a lithium secondary battery, a method of preparing the nickel-based active material, and a lithium secondary battery including a positive electrode including the nickel-based active material, according to embodiments will be described.

According to an aspect of an embodiment, provided is a positive electrode active material having a high initial efficiency and a capacity during a charging/discharging process by improving a lithium diffusivity during a charging/discharging process.

According to another aspect of an embodiment, provided are a nickel-based active material for a lithium secondary battery having improved capacity and lifetime as crack occurrence and increase of resistance decrease during a charging/discharging process; and a method of preparing the nickel-based active material.

According to another aspect of an embodiment, provided is a lithium secondary battery having improved cell performance by including a positive electrode including the nickel-based active material.

When a nickel-based active material for a lithium secondary battery according to an embodiment is used, a lithium secondary battery having improved capacity, efficiency, and lifetime characteristics may be manufactured.

According to an embodiment, a nickel-based active material for a lithium secondary battery includes a secondary particle including an agglomerate of at least two plate primary particles, wherein at least a part of the secondary particle has a structure in which the plate primary particles are arranged radially, and a porosity of an exterior portion of the secondary particle is greater than that of an interior portion of the secondary particle.

For example, the secondary particle may include an agglomerate of at least two plate primary particles.

In one embodiment, a size of the secondary particles may be in a range of about 2 $\mu$m to about 18 $\mu$m, for example, about 8 $\mu$m to about 10 $\mu$m, or, for example, about 9 $\mu$m. The size of the secondary particles denotes an average (particle) diameter of the secondary particles when the secondary particles are spherical or refers to a length of a longitudinal axis of the secondary particles when the secondary particles are elliptical or rod-shaped. In this regard, the secondary particles maintain a size sufficiently small enough to improve characteristics of a nickel-based active material. The average (particle) diameter denotes D50. The average (particle) diameter may be measured by particle size analyzer (PSA).

In one embodiment, the secondary particle may include a part in which the plate primary particles are arranged in a radial arrangement structure and a part in which the plate primary particles are arranged in an irregular porous structure. The term "irregular porous structure" as used herein denotes a structure having pores that do not have regular pore sizes or shapes and have no uniformity.

As used herein, the term "plate primary particle" may refer to a particle having a thickness that is smaller than a length of a longitudinal axis (in a plane direction). The term "longitudinal axis length" as used herein may refer to a maximum length based on the largest plane of the plate primary particle.

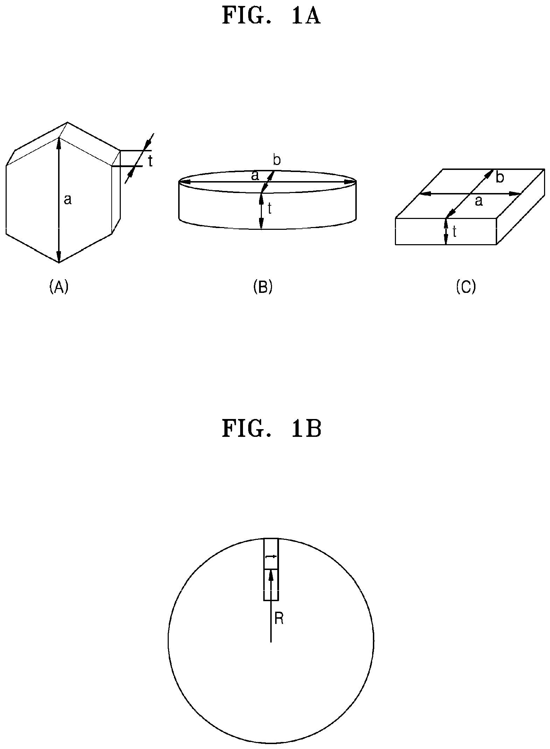

FIG. 1A is a schematic view showing shapes of a plate primary particle according to an embodiment. In FIG. 1A, a thickness t of the plate primary particle is smaller than plane-direction lengths a and b. The plane-direction length may be longer than or the same with the plane-direction length b. In the plate primary particle, a direction in which the thickness t is defined is referred to as "a thickness direction", and directions in which the lengths a and b are contained are referred to as "plane-directions".

In this regard, the plate primary particle refers to a structure having a length t in one axis direction (i.e., a thickness direction) that is smaller than a longitudinal axis length a in another direction (i.e., a plane direction). As shown in of FIG. 1A, the plate primary particle may have a polygonal shape, such as hexagonal, nano-plate shape (A), a nano-disk shape (B), or a rectangular parallelepiped shape (C).

A porosity of an exterior portion of the secondary particle is in a range of about 5% to about 30%, for example, about 6% to about 20%, about 6% to about 10% or about 6% to about 8%.

In one embodiment, a porosity of an interior portion of the secondary particle may be about 10% or lower, or, for example, about 5% or lower. In some embodiments, a porosity of an interior portion of the secondary particle may be in a range of about 0.000001% to about 5%, e.g. about 0.0001% to about 5%, about 0.01% to about 5%, about 0.1% to about 5%, about 0.1% to about 3%, about 0.5% to about 3%, about 0.5% to about 1.5% or about 1% to about 1.5%. That is, the interior portion of the secondary particle has a tight structure in which few pores exist.

A pore size of the pores in the interior portion of the secondary particle may be less than 200 nm, for example, about 150 nm or less, or, for example, in a range of about 10 nm to about 120 nm. A pore size of the pores in the exterior portion of the secondary particle may be in a range of about 150 nm to about 550 nm, or, for example, about 200 nm to about 500 nm. In this regard, when a pore size of the pores in the exterior portion are greater than that of the pores in the interior portion of the secondary particle, a lithium diffusion distance near a surface of the secondary particle contacting an electrolyte solution may decrease in the secondary particle of the same size, and a volume change occurring during charging/discharging of a secondary battery may reduce.

As used herein, the term "pore size" denotes an average diameter of pores when the pores are spherical or circular. When the pores are elliptical, the pore size refers to a longitudinal axis length.

The nickel-based active material includes plate primary particles, and longitudinal axes of the plate primary particles are arranged in a radial direction. Also, a crystal plane is a (110) plane through which lithium moves in and out.

The nickel-based active material includes a secondary particle including plate primary particles, and the secondary particle has a structure in which the plate primary particles are arranged radially.

As used herein, the term "radially" denotes that thicknesses t of the plate primary particles are aligned perpendicular to a direction R that faces a center of a secondary particle 100, as shown in FIG. 1B.

As used herein, the term "exterior portion" refers to a region of about 40 length% from a surface of the secondary particle based on the total distance from the center of the secondary particle to the surface.

The term "interior portion" refers to a region of about 60 length% from a center of the secondary particle, based on the total distance from the center to a surface of the secondary particle. The plate primary particles that constitute the exterior portion and the interior portion of the secondary particle may have an average short axis length in a range of about 100 nm to about 300 nm, or, for example, about 150 nm to about 250 nm, and an average longitudinal axis length in a range of about 300 nm to about 1000 nm, or, for example, about 450 nm to about 950 nm. Here, the average longitudinal axis length is about 2 times to 7 times the average short axis length. In this regard, when the average longitudinal axis length and the average short axis length are within this ratio and the plate primary particles are arranged radially having a small size, relatively many lithium diffusion pathways between boundaries and many crystal planes capable of transferring lithium to the outside are exposed on a surface of the secondary particle, which may improve lithium diffusivity, and thus a high initial efficiency and an increased capacity may be secured.

Also, when the plate primary particles are arranged radially, pores exposed on a surface of the secondary particle between the plate primary particles may also face a center of the secondary particle, which may facilitate diffusion of lithium from the surface. The secondary particle may be evenly contracted or expanded during intercalation or deintercalation of lithium due to the radially arranged plate primary particle; pores existing in a (001) direction, toward which the secondary particle expands during deintercalation of lithium, act as a buffer; a chance of crack occurrence during shrinkage and expansion may be low since a size of the plate primary particles is small; and cracks between the plate primary particles during a charging/discharging process may occur less as the pores inside the secondary particle additionally decrease the volume change. Therefore, lifetime characteristics may improve, and an increase of resistance may decrease.

An average length of the plate primary particles may be in a range of about 150 nm to about 500 nm, for example, about 200 nm to about 380 nm, or, for example, about 290 nm to about 360 nm. The average length refers to an average length of an average longitudinal axis length and an average short axis length in a plane direction of the plate primary particles.

An average thickness of the plate primary particles that constitute the exterior portion and the interior portion of the secondary particle may be in a range of about 100 nm to about 200 nm, for example, about 120 nm to about 180 nm, or, for example, about 130 nm to about 150 nm.

Also, a ratio of the average thickness and the average length may be in a range of about 1:2 to about 1:10, for example, about 1:2.1 to about 1:5, or, for example, about 1:2.3 to about 1:2.9.

In this regard, when the average length, the average thickness, and the ratio of the average thickness and the average length are within the ranges above and the plate primary particles are arranged radially having a small size as described above, relatively many lithium diffusion pathways between boundaries and many crystal planes capable of transferring lithium to the outside are exposed on a surface of the secondary particle, which may improve lithium diffusivity, and thus a high initial efficiency and an increased capacity may be secured. Also, when the plate primary particles are arranged radially, pores exposed on a surface of the secondary particle between the plate primary particles may also face a center of the secondary particle, which may facilitate diffusion of lithium from the surface. Closed pores and/or opened pores may exist in the interior portion and the exterior portion of the nickel-based active material. The closed pores may not include an electrolyte, whereas the opened pores may contain an electrolyte in the pores.

In one embodiment, the nickel-based active material is an active material represented by Formula 1:

$$\text{Formula 1} \qquad Li_a(Ni_{1-x-y-z}Co_xMn_yM_z)O_2$$

In Formula 1, M is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al); and

$1.0 \leq a \leq 1.3$, $x \leq (1-x-y-z)$, $y \leq (1-x-y-z)$, $0 < x < 1$, $0 \leq y < 1$, and $0 \leq z < 1$. Accordingly, in the nickel-based active material of Formula 1, an amount of nickel is greater than an amount of cobalt, and an amount of nickel is greater than an amount of manganese.

In one embodiment, in Formula 1, $1.0 \leq a \leq 1.3$, $x \leq (1-x-y-z)$, $y \leq (1-x-y-z)$, $z \leq (1-x-y-z)$, $0 < x < 1$, $0 \leq y < 1$, and $0 \leq z < 1$. Accordingly, in the nickel-based active material of Formula 1, an amount of nickel is greater than an amount of cobalt, and an amount of nickel is greater than an amount of manganese.

In one embodiment, in Formula 1, $1.0 \leq a \leq 1.3$, $0 < x \leq 0.33$, $0 \leq y \leq 0.5$, $0 \leq z \leq 0.05$, and $0.33 \leq (1-x-y-z) \leq 0.95$. For example, in Formula 1, $0.5 \leq (1-x-y-z) \leq 0.95$.

In one embodiment, in Formula 1, for example, a is in a range of about 1 to about 1.1, x is in a range of about 0.1 to about 0.33, and y is in a range of about 0.05 to about 0.3.

In some embodiments, in Formula 1, $0 \leq z \leq 0.05$, $0 < x \leq 0.33$, and $0 \leq y \leq 0.33$.

In one embodiment, in Formula 1, z is 0.

In some embodiments, in Formula 1, when $0 < z \leq 0.05$, M may be aluminium.

In the nickel-based active material, an amount of nickel is greater than that of each of transition metals based on 1 mol of the total amount of the transition metals. For example, an amount of nickel in the nickel-based active material may be in a range of about 33 mol% to about 95 mol% based on the total amount of transition metals (Ni, Co, and Mn), the amount of nickel may be greater than an amount of manganese and the amount of nickel may be greater than an amount of cobalt. In this regard, when the nickel-based active material has a high nickel content, a lithium secondary battery including a positive electrode including the nickel-based active material may have high lithium diffusivity, good conductivity, and a relatively high capacity at the same voltage, but cracks may occur in the lifetime described above, and thus lifetime characteristics may deteriorate.

The nickel-based active material is $LiNi_{0.6}Co_{0.2}Mn_{0.2}O_2$, $LiNi_{0.5}Co_{0.2}Mn_{0.3}O_2$, $LiNi_{0.33}Co_{0.33}Mn_{0.33}O_2$, $LiNi_{0.8}Co_{0.1}Mn_{0.1}O_2$, or $LiNi_{0.85}Co_{0.1}Al_{0.05}O_2$.

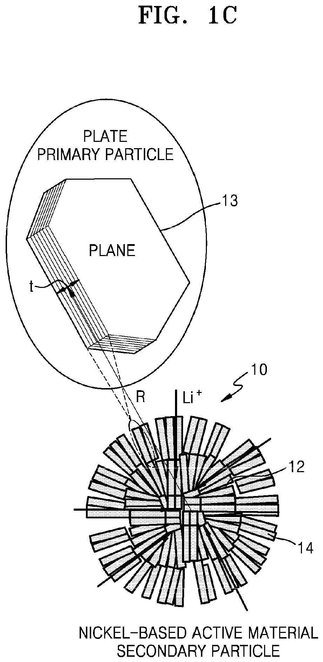

An overall porosity of the nickel-based active material is in a range of about 1% to about 8%, e.g. about 1% to about 6%. FIG. 1C is a schematic view of a structure of the nickel-based active material according to an embodiment.

The nickel-based active material includes plate primary particles, and longitudinal axes of the plate primary particles are arranged in a radial direction. Here, a plane through which lithium may move in and out, that is a plane perpendicular to the (001) plane, is exposed on a surface of the secondary particle. In FIG. 1C, arrows in a center direction of the secondary particle are moving directions of $Li^+$ ions. Referring to FIG. 1C, a nickel based compound 10 includes a secondary particle in which plate primary particles 13 are arranged in a radial direction, and the secondary particle may include an interior portion 12 and an exterior portion 14. More empty spaces between the plate primary particles 13 exist in the exterior portion 14 of the secondary particle than in the interior portion 12 of the secondary particle. Also, a porosity in the exterior portion 14 may be greater than that of the interior portion 12.

As described above, the nickel-based active material according to an embodiment may include radially arranged plate primary particles, which may help lithium diffusion and suppress stress according to volume change during charging/discharging of lithium, and thus crack occurrence may be suppressed. Also, the plate primary particles may decrease a surface resistance layer during preparation of the nickel-based active material and may expose more of those in a c-axis direction to a surface of the nickel-based active material, and thus an active surface area needed for lithium diffusion may increase.

A size of the secondary particle may be in a range of about 2 $\mu$m to about 18 $\mu$m, for example, about 8 $\mu$m to about 10 $\mu$m, or, for example, about 9 $\mu$m. The size of the secondary particle refers to an average diameter when the secondary particle is spherical or a longitudinal axis length when the secondary particle is elliptical or rod-shaped.

A method of preparing a nickel-based active material according to an embodiment will be described.

In one embodiment, the method of preparing a nickel-based active material includes low-temperature heat-treating a lithium precursor and a metal hydroxide and high-temperature heat-treating.

The low-temperature heat-treating may include mixing the lithium precursor and the metal hydroxide at a predetermined molar ratio; and heat-treating the mixture at a temperature in a range of about 650°C to about 800°C.

The metal hydroxide may be a compound represented by Formula 2.

$$\text{Formula 2} \qquad (Ni_{1-x-y-z}Co_xMn_yM_z)(OH)_2$$

In Formula 2, M is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al); and

$x \leq (1-x-y-z)$, $y \leq (1-x-y-z)$, $0<x<1$, $0\leq y<1$, and $0\leq z<1$.

In one embodiment, in Formula 2, M is an element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al); and $x \leq (1-x-y-z)$, $y \leq (1-x-y-z)$, $z \leq (1-x-y-z)$, $0<x<1$, $0\leq y<1$, and $0\leq z<1$.

In Formula 2, $0<x\leq0.33$, $0\leq y\leq0.5$, $0\leq z\leq0.05$, and $0.33\leq(1-x-y-z)\leq0.95$.

In Formula 2, $0.5\leq(1-x-y-z)\leq0.95$.

The metal hydroxide of Formula 2 may be, for example, $Ni_{0.6}Co_{0.2}Mn_{0.2}(OH)_2$, $Ni_{0.5}Co_{0.2}Mn_{0.3}(OH)_2$, $Ni_{0.33}Co_{0.33}Mn_{0.33}(OH)_2$, $Ni_{0.8}Co_{0.1}Mn_{0.1}(OH)_2$ or $Ni_{0.85}Co_{0.1}Al_{0.05}(OH)_2$.

The lithium precursor may be, for example, a lithium hydroxide, a lithium fluoride, a lithium carbonate, or a mixture thereof. A mixing ratio of the lithium precursor and the metal hydroxide may be stoichiometrically controlled to prepare the active material of Formula 1.

The mixing of the lithium precursor and the metal hydroxide may be dry-mixing and may be performed by using a mixer.

The low-temperature heat-treating of the mixture is performed under an oxidative gas atmosphere. The oxidative gas atmosphere uses an oxidative gas such as oxygen or air.

The low-temperature heat-treating of the mixture may be performed at a densification temperature or lower as a reaction between the lithium precursor and the metal hydroxide proceeds. Here, the term "densification temperature" refers to the temperature at which crystallization occurs to a sufficient degree so as to promote an increase in charging capacity of the active material.

For example, the low-temperature heat-treating of the mixture may be performed at a temperature in a range of about 650°C to about 800°C, or, for example, about 700°C to about 800°C.

A time of the low-temperature heat-treating of the mixture may vary depending on a low-temperature heat-treating temperature, but, for example, the low-temperature heat-treating may be performed for about 3 hours to about 10 hours.

When the heat-treating is performed in these conditions, a nickel-based active material secondary particle having plate primary particles arranged in a radial arrangement may be prepared.

The high-temperature heat-treating may include high-temperature heat-treating the nickel-based active material secondary particle under an oxidative gas atmosphere.

When preparing the nickel-based active material secondary particle, an atmosphere in a reactor may be mostly remained, and thus formation of a resistance layer may be suppressed as much as possible, and particles may be densified.

The high-temperature heat-treating of the nickel-based active material secondary particle may be performed at a temperature in a range of about 800°C to about 1000°C, or, for example, about 850°C to about 900°C. A time of the high-temperature heat-treating of the nickel-based active material secondary particle may vary depending on a high-temperature heat-treating temperature, but, for example, the high-temperature heat-treating may be performed for about 3 hours to about 10 hours.

In one embodiment, an average particle diameter of the nickel-based active material secondary particles may be in a range of about 2 $\mu$m to about 18 $\mu$m, or, for example, about 3 $\mu$m to about 12 $\mu$m, about 8 $\mu$m to about 10 $\mu$m, or for example, about 9 $\mu$m. When the average particle diameter is within this range, stress occurred by volume change during a charging/discharging process may be suppressed. The average particle diameter denotes D50. The average particle diameter may be measured by a particle size analyzer (PSA).

The high-temperature heat-treating of the nickel-based active material secondary particle may include further adding a compound containing at least one selected from titanium, zirconium, and aluminium.

Examples of the compound containing at least one selected from titanium, zirconium, and aluminium may include titanium oxide, zirconium oxide, and aluminium oxide.

An amount of the compound containing at least one selected from titanium, zirconium, and aluminium may be in a range of about 0.0005 parts to about 0.01 parts by weight based on 100 parts by weight of the nickel-based active material secondary particle.

Presence and distribution of an oxide of the at least one selected from titanium, zirconium, and aluminium may be confirmed by electron probe micro analysis (EPMA).

While discharging an active material, when a diffusion rate of lithium decreases and a size of a nickel-based active material secondary particle is large at the end of the discharging, a discharge capacity is small, compared to a charge capacity, due to resistance caused by lithium penetrating into an interior portion of the nickel-based active material secondary particle, and thus a charge/discharge efficiency may deteriorate. However, an exterior portion of the nickel-based active material secondary particle according to an embodiment has a porous structure, which decreases a diffusion distance from a surface to the interior portion, and an exterior portion is arranged in a radial direction toward the surface, where lithium may easily intercalate through the surface. Also, a size of primary particles of the nickel-based active material is small, which secures lithium transferring pathways between crystal grains. Further, a size of the primary particles is small, and pores between the primary particles reduce volume change that occurs during a charging/discharging process, and thus stress loaded on the secondary particle may be minimized.

When the nickel-based active material secondary particle according to an embodiment is cut into a cross-section, in term of a volume ratio and a surface area ratio of the internal part and the external part, the internal part may occupy about 20 vol% to about 35 vol%, or, for example, about 22 vol%, based on the total volume of the nickel-based active material secondary particle, in case the internal part is defined as a region within about 60% from a center of the nickel-based active material secondary particle.

C-axes of the nickel-based active material primary particles according to an embodiment are arranged in a radial direction.

Hereinafter, a method of preparing a lithium secondary battery having a positive electrode including the nickel-based active material according to an embodiment; a negative electrode; a non-aqueous electrolyte containing a lithium salt; and a separator.

In some embodiments, the lithium secondary battery may be manufactured in the following manner.

First, a positive electrode is prepared.

For example, a positive electrode active material, a conducting agent, a binder, and a solvent are mixed to prepare a positive electrode active material composition. In some embodiments, the positive electrode active material composition may be directly coated on a metallic current collector to prepare a positive electrode plate. In some embodiments, the positive electrode active material composition may be cast on a separate support to form a positive electrode active material film, which may then be separated from the support and laminated on a metallic current collector to prepare a positive electrode plate. The positive electrode is not limited to the examples described above, and may be one of a variety of types.

The positive electrode active material may be any one available in the art, for example, which uses the nickel-based active material and may be a lithium-containing metal oxide. In some embodiments, the positive electrode active material may be at least one of a composite oxide of lithium with a metal selected from among Co, Mn, Ni, and a combination thereof. In some embodiments, the positive electrode active material may be a compound represented by one of the following formulae:

$Li_aA_{1-b}B'_bD'_2$ (where $0.90 \leq a \leq 1.8$, and $0 \leq b \leq 0.5$); $Li_aE_{1-b}B'_bO_{2-c}D'_c$ (where $0.90 \leq a \leq 1.8$, $0 \leq b \leq 0.5$, and $0 \leq c \leq 0.05$); $LiE_{2-b}B'_bO_{4-c}D'_c$ (where $0 \leq b \leq 0.5$, and $0 \leq c \leq 0.05$); $Li_aNi_{1-b-c}Co_bB'_cD'_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}CO_bB'_cO_{2-\alpha}F'_\alpha$ (where $0.90 \leq a \leq 1.8$, $0 \leq b \leq 0.5$, $0 \leq c \leq 0.05$, and $0 < \alpha < 2$); $Li_aNi_{1-b-c}Co_bB'_cO_{2-\alpha}F'_2$ (where $0.90 \leq a \leq 1.8$, $0 \leq b \leq 0.5$, $0 \leq c \leq 0.05$, and $0 < \alpha < 2$); $Li_aNi_{1-b-c}Mn_bB'_cD'_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Mn_bB'_cO_{2-\alpha}F'_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB'_cO_{2-\alpha}F'_2$ (where $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dG_eO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1.8$, and $0.001 \leq b \leq 0.1$); $Li_aCoG_bO_2$ (where $0.90 \leq a \leq 1.8$, and $0.001 \leq b \leq 0.1$); $Li_aMnG_bO_2$ (where $0.90 \leq a \leq 1.8$, and $0.001 \leq b \leq 0.1$); $Li_aMn_2G_bO_4$ (where $0.90 \leq a \leq 1.8$, and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); and $LiFePO_4$.

In the formulae above, A may be selected from nickel (Ni), cobalt (Co), manganese (Mn), and combinations thereof; B' may be selected from aluminium (Al), nickel (Ni), cobalt (Co), manganese (Mn), chromium (Cr), iron (Fe), magnesium (Mg), strontium (Sr), vanadium (V), a rare earth element, and combinations thereof; D' may be selected from oxygen (O), fluorine (F), sulfur (S), phosphorus (P), and combinations thereof; E may be selected from cobalt (Co), manganese (Mn), and combinations thereof; F' may be selected from fluorine (F), sulfur (S), phosphorus (P), and combinations thereof; G may be selected from aluminium (Al), chromium (Cr), manganese (Mn), iron (Fe), magnesium (Mg), lanthanum (La), cerium (Ce), strontium (Sr), vanadium (V), and combinations thereof; Q is selected from titanium (Ti), molybdenum (Mo), manganese (Mn), and combinations thereof; I' is selected from chromium (Cr), vanadium (V), iron (Fe), scandium (Sc), yttrium (Y), and combinations thereof; and J may be selected from vanadium (V), chromium (Cr), manganese (Mn), cobalt (Co), nickel (Ni), copper (Cu), and combinations thereof.

In some embodiments, the positive electrode active material may be $LiCoO_2$, $LiMn_xO_{2x}$ (where x=1 or 2), $LiNi_{1-x}Mn_xO_{2x}$ (where 0<x<1), $LiNi_{1-x-y}Co_xMn_yO_2$ (where $0 \leq x \leq 0.5$ and $0 \leq y \leq 0.5$), or $LiFePO_4$.

The compounds listed above as positive electrode active materials may have a surface coating layer (hereinafter, also referred to as "coating layer"). Alternatively, a mixture of a compound without a coating layer and a compound having a coating layer, the compounds being selected from the compounds listed above, may be used. In some embodiments, the coating layer may include at least one compound of a coating element selected from the group consisting of oxide, hydroxide, oxyhydroxide, oxycarbonate, and hydroxycarbonate of the coating element. In some embodiments, the compounds for the coating layer may be amorphous or crystalline. In some embodiments, the coating element for the coating layer may be magnesium (Mg), aluminium (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. In some embodiments, the coating layer may be formed using any method that does not adversely affect the physical properties of the positive electrode active material when a compound of the coating element is used. For example, the coating layer may be formed using a spray coating method, or a dipping method. The coating methods may be well understood by one of ordinary skill in the art, and thus a detailed description thereof will be omitted.

In some embodiments, the conducting agent may be carbon black or graphite particulates, but embodiments are not limited thereto. Any material available as a conducting agent in the art may be used.

Examples of the binder are a vinylidene fluoride/hexafluoropropylene copolymer, polyvinylidene fluoride (PVDF), polyacrylonitrile, polymethylmethacrylate, polytetrafluoroethylene, mixtures thereof, and a styrene butadiene rubber polymer, but embodiments are not limited thereto. Any material available as a binding agent in the art may be used.

Examples of the solvent are N-methyl-pyrrolidone, acetone, and water, but embodiments are not limited thereto. Any material available as a solvent in the art may be used.

The amounts of the positive electrode active material, the conducting agent, the binder, and the solvent may be in ranges that are commonly used in lithium batteries. At least one of the conducting agent, the binder, and the solvent may be omitted according to the use and the structure of the lithium battery.

Next, a negative electrode is prepared.

For example, a negative electrode active material, a conducting agent, a binder, and a solvent are mixed to prepare a negative electrode active material composition. In some embodiments, the negative electrode active material composition may be directly coated on a metallic current collector and dried to prepare a negative electrode plate. In some embodiments, the negative electrode active material composition may be cast on a separate support to form a negative electrode active material film, which may then be separated from the support and laminated on a metallic current collector to prepare a negative electrode plate.

In some embodiments, the negative electrode active material may be any negative electrode active material for a lithium battery available in the art. For example, the negative electrode active material may include at least one selected from lithium metal, a metal that is alloyable with lithium, a transition metal oxide, a non-transition metal oxide, and a carbonaceous material.

Examples of the metal alloyable with lithium are Si, Sn, Al, Ge, Pb, Bi, Sb, a Si-Y' alloy (where Y' is an alkali metal, an alkali earth metal, a Group XIII element, a Group XIV element, a transition metal, a rare earth element, or a combination thereof, and Y' is not Si), and a Sn-Y' alloy (where Y' is an alkali metal, an alkali earth metal, a Group XIII element, a Group XIV element, a transition metal, a rare earth element, or a combination thereof, and Y is not Sn). In some embodiments, Y' may be magnesium (Mg), calcium (Ca), strontium (Sr), barium (Ba), radium (Ra), scandium (Sc), yttrium (Y), titanium (Ti), zirconium (Zr), chromium (Cr), molybdenum (Mo), tungsten (W), iron (Fe), lead (Pb), ruthenium (Ru), osmium (Os), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), germanium (Ge), phosphorus (P), arsenic (As), antimony (Sb), bismuth (Bi), sulfur (S), selenium (Se), or tellurium (Te).

Examples of the transition metal oxide include a lithium titanium oxide, a vanadium oxide, and a lithium vanadium oxide.

Examples of the non-transition metal oxide include $SnO_2$ and $SiO_x$ (where 0<x<2).

Examples of the carbonaceous material are crystalline carbon, amorphous carbon, and mixtures thereof. Examples of the crystalline carbon are graphite, such as natural graphite or artificial graphite that are in shapeless, plate, flake, spherical, or fibrous form. Examples of the amorphous carbon are soft carbon (carbon sintered at low temperatures), hard carbon, meso-phase pitch carbides, and sintered cokes.

In some embodiments, the conducting agent, the binder, and the solvent used for the negative electrode active material composition may be the same as those used for the positive electrode active material composition.

The amounts of the negative electrode active material, the conducting agent, the binder, and the solvent may be the same levels generally used in the art for lithium batteries. At least one of the conducting agent, the binder, and the solvent may be omitted according to the use and the structure of the lithium battery.

The separator for the lithium battery may be any separator that is commonly used in lithium batteries. In some embodiments, the separator may have low resistance to migration of ions in an electrolyte and have an excellent electrolyte-retaining ability. Examples of the separator are glass fiber, polyester, Teflon, polyethylene, polypropylene, polytetrafluoroethylene (PTFE), and a combination thereof, each of which may be a non-woven or woven fabric. For example, a rollable separator including polyethylene or polypropylene may be used for a lithium ion battery. A separator with a good organic electrolytic solution-retaining ability may be used for a lithium ion polymer battery. For example, the separator may be manufactured in the following manner.

In some embodiments, a polymer resin, a filler, and a solvent may be mixed together to prepare a separator composition. Then, the separator composition may be directly coated on an electrode, and then dried to form the separator. In some embodiments, the separator composition may be cast on a support and then dried to form a separator film, which may then be separated from the support and laminated on an electrode to form the separator.

The polymer resin used to manufacture the separator may be any material that is commonly used as a binder for electrode plates. Examples of the polymer resin are a vinylidenefluoride/hexafluoropropylene copolymer, polyvinylidene fluoride (PVDF), polyacrylonitrile, polymethylmethacrylate, and a mixture thereof.

Then, an electrolyte is prepared.

In some embodiments, the electrolyte may be an organic electrolyte solution. In some embodiments, the electrolyte may be in a solid phase. Examples of the electrolyte are lithium oxide and lithium oxynitride. Any material available as a solid electrolyte in the art may be used. In some embodiments, the solid electrolyte may be formed on the negative electrode by, for example, sputtering.

In some embodiments, the organic electrolyte solution may be prepared by dissolving a lithium salt in an organic solvent.

The organic solvent may be any solvent available as an organic solvent in the art. In some embodiments, the organic solvent may be propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, $\gamma$-butyrolactone, dioxorane, 4-methyldioxorane, N,N-dimethyl formamide, dimethyl acetamide, dimethylsulfoxide, dioxane, 1,2-dimethoxyethane, sulforane, dichloroethane, chlorobenzene, nitrobenzene, diethylene glycol, dimethyl ether, or a mixture thereof.

In some embodiments, the lithium salt may be any material available as a lithium salt in the art. In some embodiments, the lithium salt may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are each independently a natural number), LiCl, Lil, or a mixture thereof.

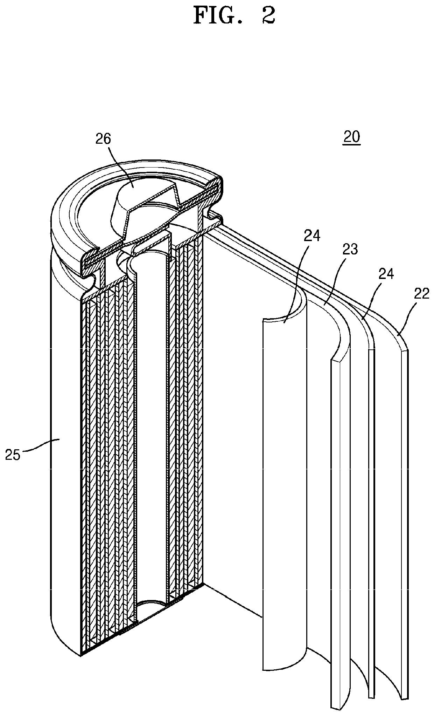

Referring to FIG. 2, a lithium secondary battery 20 includes a positive electrode 23, a negative electrode 22, and a separator 24. In some embodiments, the positive electrode 23, the negative electrode 22, and the separator 24 may be wound or folded, and then sealed in a battery case 25. In some embodiments, the battery case 25 may be filled with an organic electrolytic solution and sealed with a cap assembly 26, thereby completing the manufacture of the lithium secondary battery 20.

In some embodiments, the battery case 25 may be a cylindrical type, a rectangular type, or a thin-film type. For example, the lithium secondary battery 20 may be a thin-film type battery.

In some embodiments, the lithium secondary battery 20 may be a lithium ion battery.

In some embodiments, the separator may be disposed between the positive electrode and the negative electrode to form a battery assembly. In some embodiments, the battery assembly may be stacked in a bi-cell structure and impregnated with the electrolytic solution. In some embodiments, the resultant assembly may be put into a pouch and hermetically sealed, thereby completing the manufacture of a lithium ion polymer battery.

In some embodiments, a plurality of battery assemblies may be stacked to form a battery pack, which may be used in any device that requires high capacity and high output, for example, in a laptop computer, a smart phone, or an electric vehicle.

The lithium battery may have improved lifetime characteristics and high rate characteristics, and thus may be used in an electric vehicle (EV), for example, in a hybrid vehicle such as a plug-in hybrid electric vehicle (PHEV). The lithium battery may be applicable to the high-power storage field. For example, the lithium battery may be used in an electric bicycle or a power tool.

Hereinafter, one or more embodiments will now be described in more detail with reference to the following examples.

Example 1: Preparation of nickel-based active material

(1) Preparation of nickel-based active material precursor

Ammonia water at a concentration of 0.5 mol/L (M) was added to a reactor, and the content in the reactor was allowed to start a reaction at a reaction temperature of 50°C. Then, metal raw materials (nickel sulfate, cobalt sulfate, and manganese sulfate) were added at a rate of 5 L/hr. Subsequently, sodium hydroxide (NaOH) was added to the reactor so that a pH of the content was in a range of 11.0 to 12.0, and the content in the reactor was allowed to react for 6 hours. When an average particle diameter (D50) of particles in the reactor reached about 10 $\mu$m, the particles were allowed to react at a temperature of about 50°C. Once the reaction was carried out, a slurry solution in the reactor was filtered, washed with distilled water of high purity, and dried in a hot air oven for 24 hours to prepare a nickel-based active material precursor ($Ni_{0.6}Co_{0.2}Mn_{2.0}(OH)_2$). Here, the precursor thus obtained was a precursor having a porosity of an exterior portion greater than that of an interior portion.

(2) Low-temperature calcining nickel-based active material secondary particle

The precursor ($Ni_{0.6}Co_{0.2}Mn_{0.2}(OH)_2$) and lithium hydroxide (LiOH) were dry-mixed at a molar ratio of 1:1, and this was heat-treated in an air atmosphere at a temperature of about 800°C for 6 hours to prepare a calcined product of a nickel-based active material ($LiNi_{0.6}Co_{0.2}Mn_{0.2}O_2$) secondary particle.

(3) High-temperature calcining nickel-based active material secondary particle

Zirconium oxide was dry-mixed with the nickel-based active material secondary particle prepared in the process (2) at a mixing weight ratio of 0.15 mol% to the nickel-based active material secondary particle prepared in the process (2), and the mixture was secondary heat-treated in an oxygen atmosphere at a temperature of about 850°C for 6 hours to prepare a nickel-based active material ($LiNi_{0.6}Co_{0.2}Mn_{0.2}O_2$) secondary particle coated with zirconium oxide.

Example 2: Preparation of lithium secondary battery including nickel-based active material secondary particle

A lithium secondary battery including the zirconium oxide-coated nickel-based active material ($LiNi_{0.6}Co_{0.2}Mn_{0.2}O_2$) secondary particle prepared in Example 1 was prepared as follows.
96 g of the zirconium oxide-coated nickel-based active material ($LiNi_{0.6}Co_{0.2}Mn_{0.2}O_2$) secondary particle prepared in Example 1, 2 g of polyvinylidene fluoride, 47 g of N-methylpyrrolidone as a solvent, and 2 g of carbon black as a conducting agent were mixed by using a mixer to prepare a mixture, and air bubbles from the mixture were removed to prepare a slurry for forming a positive electrode active material layer in which components were uniformly dispersed.
The slurry thus obtained was prepared in the form of a thin electrode plate by coating the slurry on an aluminium film by using a doctor blade, drying at 135°C for 3 hours or more, and then roll-pressing and vacuum-drying to prepare a positive electrode.
As a counter electrode of the positive electrode, a lithium metal electrode was used to prepare a 2032-type coin cell. A separator (having a thickness of about 16 $\mu$m) formed of a porous polyethylene (PE) film was disposed between the positive electrode and the lithium metal electrode, and an electrolyte solution was injected to the product, thereby manufacturing a 2032-type coin cell.
Here, the electrolyte solution was a solution prepared by dissolving 1.1 M of $LiPF_6$ in a solvent mixture including ethylene carbonate (EC) and ethylmethyl carbonate (EMC) at a volume ratio of 3:5.

Comparative Example 1

A nickel-based active material ($LiNi_{0.6}Co_{0.2}Mn_{0.2}O_2$) secondary particle was prepared in the same manner as in Example 1, except that a composite metal hydroxide ($Ni_{0.6}Co_{0.2}Mn_{0.2}(OH)_2$) precursor having a large number of internal pores was used. The precursor having a large number of internal pores was obtained by maintaining an amount of ammonia at a high concentration of about 0.5 mol or higher at the initial stage of preparing the precursor and then maintaining the concentration low as lower than about 0.5 mol to grow the precursor slowly.

Comparative Example 2

A nickel-based active material ($LiNi_{0.6}Co_{0.2}Mn_{0.2}O_2$) secondary particle was prepared in the same manner as in Example 1, except that a composite metal hydroxide ($Ni_{0.6}Co_{0.2}Mn_{0.2}(OH)_2$) precursor having no internal pore and arrangement without directivity was used. The precursor having no internal pore and arrangement without directivity was obtained by maintaining the concentration low as lower than about 0.5 mol to grow the precursor slowly.

Comparative Example 3

A coin cell was prepared in the same manner as in Example 2, except that the secondary particle prepared in Comparative Example 1 was used instead of the zirconium oxide-coated nickel-based active material (LiNi$_{0.6}$Co$_{0.2}$Mn$_{0.2}$O$_2$) secondary particle prepared in Example 1.

Comparative Example 4

A coin cell was prepared in the same manner as in Example 2, except that the secondary particle prepared in Comparative Example 2 was used instead of the zirconium oxide-coated nickel-based active material (LiNi$_{0.6}$Co$_{0.2}$Mn$_{0.2}$O$_2$) secondary particle prepared in Example 1.

Evaluation Example 1: Scanning electron microscope analysis

Scanning electron microscope analysis was performed on the nickel-based active material primary particles prepared in Example 1 and Comparative Example 1. The scanning electron microscope was Magellan 400L (available from FEI Company). Sample sections were pretreated by using CP2 (available from JEOL) at 6 kV and 150 uA for 4 hours. The scanning electron microscope analysis was carried out at 350 V and 3.1 pA SE.

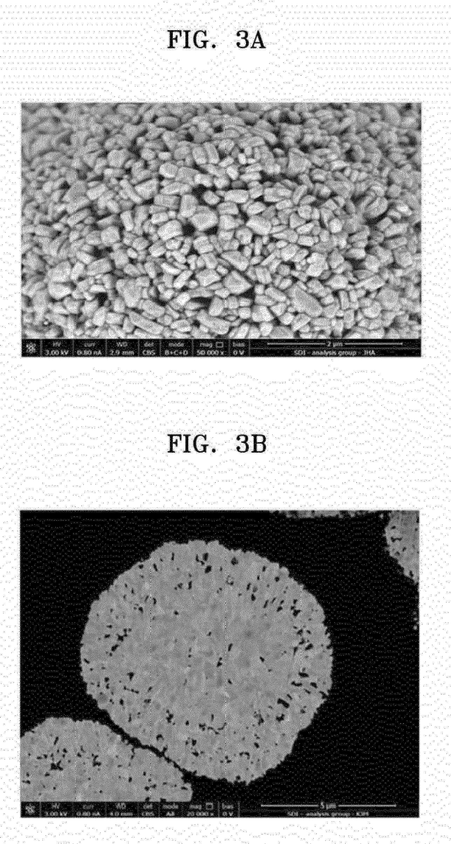

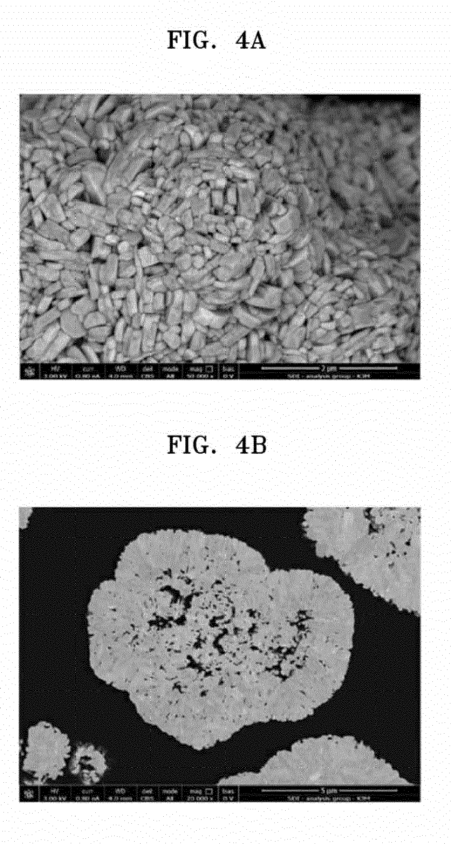

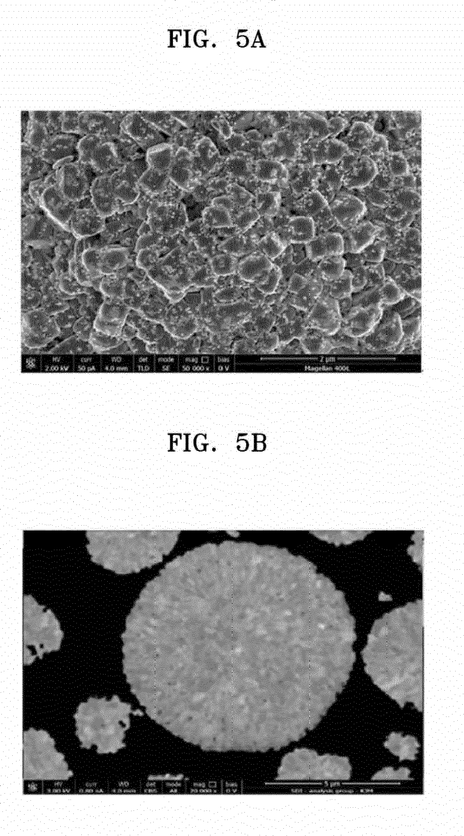

The results of the scanning electron microscope analysis are shown in FIGS. 3A and 3B, FIGS. 4A and 4B and FIGS. 5A and 5B. FIGS. 3A and 3B are related to the nickel-based active material prepared in Example 1; FIGS. 4A and 4B are related to the nickel-based active material prepared in Comparative Example 1; and FIGS. 5A and 5B are related to the nickel-based active material prepared in Comparative Example 2.

Referring to FIGS. 3A and 3B, the nickel-based active material prepared in Example 1 included primary particles arranged in a radial structure in an exterior portion and an interior portion, where pores existed between the primary particles, and an irregular porous structure existed in the interior portion.

On the contrary, the nickel-based active material prepared in Comparative Example 1, as shown in FIGS. 4A and 4B, had more number of pores in its interior portion compared to the number of pores in an exterior portion of the secondary particle.

Also, the nickel-based active material prepared in Comparative Example 2, as shown in FIGS. 5A and 5B, included primary particles that were randomly arranged and had few pores.

Evaluation Example 2: Porosity analysis of nickel-based active material particle

The scanning electron microscope image of the nickel-based active material of Example 1 was analyzed, and porosities of the interior portion and the exterior portion of the secondary particle were confirmed as shown below. The results are shown in Table 1.

[Table 1]

|  | Particle fraction (%) | Pore fraction (%) |
|---|---|---|
| Interior portion | 98.81 | 1.19 |
| Exterior portion | 93.71 | 6.29 |
| *A particle fraction denotes a ratio of a surface area occupied by particles with respect to the total surface area, and a pore fraction denotes a ratio of a surface area occupied by pores with respect to the total surface area. | | |

Also, the scanning electron microscope image of the nickel-based active material of Comparative Example 1 was analyzed, and porosities of the interior portion and the exterior portion of the secondary particle were confirmed as shown below. The results are shown in Table 2.

[Table 2]

|  | Particle fraction (%) | Pore fraction (%) |
|---|---|---|
| Interior portion | 72.01 | 27.99 |
| Exterior portion | 97.14 | 2.86 |

Referring to Tables 1 and 2, it was confirmed that the nickel-based active material of Example 1 had a secondary particle, in which a porosity of the exterior portion is higher than that of an interior portion, and that the nickel-based active material of Comparative Example 1 had a secondary particle, in which a porosity of an interior portion is higher than that of an exterior portion.

Evaluation Example 3: Initial charge/discharge efficiency (ICE)

The coin cells prepared in Example 2 and Comparative Examples 3 and 4 were charged/discharged once at 0.1 C to perform a formation process. Then, charged/discharged once at 0.2 C to confirm initial charge/discharge characteristics. The coin cell was thereafter 50 times charged/discharged at 1 C to observe its cycle characteristics. The charging process started with a constant current (CC) mode, changed to a constant voltage (CV) mode, and was set to be cut-off at 0.01 C. The discharging process started with a CC mode and was set to be cut-off at 1.5 V.

An initial charge/discharge efficiency was defined according to Equation 1.

Equation 1

Initial charge/discharge efficiency $[\%]=[1^{st}$ cycle discharge capacity/$1^{st}$ cycle charge capacity]$\times 100$

The initial charge/discharge efficiencies of the coin cells prepared in Example 2 and Comparative Examples 3 and 4 were evaluated, and the results are shown in Table 3.

Table 3

| 45°C High-temperature lifetime CHC | $1^{st}$ cycle | | |
|---|---|---|---|
| | Charge capacity (mAh/g) | Discharge capacity (mAh/g) | Efficiency (%) |
| Example 2 | 197.1 | 187.4 | 95.1 |
| Comparative Example 3 | 196.9 | 186.8 | 94.9 |
| Comparative Example 4 | 197.4 | 179.3 | 90.8 |

Referring to Table 3, the coin cell prepared in Example 2 had improved initial charge/discharge efficiency compared to those of the coin cells prepared in Comparative Examples 3 and 4.

Evaluation Example 4: Charge/discharge characteristics (rate performance)

The coin cells prepared in Example 2 and Comparative Examples 3 and 4 were each charged at a constant current (0.1 C) and a constant voltage (1.0 V and cut-off at 0.01 C), rested for 10 minutes, and then discharged until a voltage was 2.5 V under a condition of a constant current (0.2 C, 0.33 C, 0.5 C, 1 C, 2 C, or 3 C). That is, when a number of charging/discharging cycle increased, a discharge rate was periodically changed to 0.2 C, 0.33 C, 0.5 C, 1 C, 2 C, or 3 C to evaluate high rate discharge characteristics (rate capability, also referred to as "rate performance") of each of the coin cells. However, during first to third charge/discharge cycles, the coin cells were discharged at a rate of 0.1 C. Here, the high rate discharge characteristics may be defined by Equation 2.

Equation 2

High rate discharge characteristic (%) = (Discharge capacity when cell is discharged at a certain constant current rate)/(discharge capacity when cell is discharged at a rate of 0.1 C) × 100

The results of the high rate discharge characteristics are shown in Table 4.

Table 4

| | Rate capability | | | | | | |
|---|---|---|---|---|---|---|---|
| | 0.1C | 0.2C | 0.33C | 0.5C | 1C | 2C | 3C |
| Example 2 | 187.5 | 182.3 | 179.1 | 176.1 | 172.3 | 167.2 | 164.5 |
| Comparative Example 3 | 186.9 | 181.8 | 179.3 | 176.9 | 172.5 | 167.5 | 164.2 |
| Comparative Example 4 | 179.6 | 175.8 | 173.0 | 170.4 | 165.5 | 160.1 | 156.5 |

Referring to Table 4, the coin half-cell prepared in Example 2 had excellent high rage discharge characteristics compared to those of the coin half cells prepared in Comparative Examples 3 and 4.

Evaluation Example 5: Lifetime characteristics (capacity retention rate)

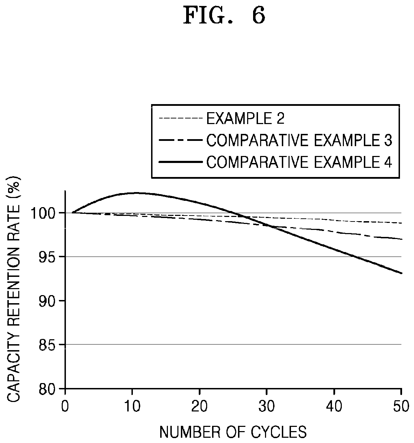

The coin cells prepared in Example 2 and Comparative Examples 3 and 4 were each charged/discharged once at a rate of 0.1 C in a room-temperature chamber and then charged/discharged at a rate of 0.2 C to check a capacity. The coin cell was moved to a high-temperature chamber (45°C) and charged/discharged at a rate of 0.2 C to check a capacity. The coin cell was 50 times charged/discharged at a rate of 1 C, and then a discharge capacity after each cycle was recorded as a relative percent (%) value based on 100% of the initial 1 C discharge capacity.
A change in the capacity retention rate according to the increased number of cycles is shown in FIG. 6.
Referring to FIG. 6, the coin cell of Example 2 (the coin cell using the nickel-based active material of Example 1) had a capacity retention rate maintained at a high level compared to those of the coin cells of Comparative Example 3 (using the nickel-based active material of Comparative Example 1) and Comparative Example 4 (using the nickel-based active material of Comparative Example 2), and thus it was confirmed that the lifetime characteristics of the coin cell of Example 2 improved.
It should be understood that embodiments described herein should be considered in a descriptive sense only and not for purposes of limitation. Descriptions of features or aspects within each embodiment should typically be considered as available for other similar features or aspects in other embodiments.
While one or more embodiments have been described with reference to the figures, it will be understood by those of ordinary skill in the art that various changes in form and details may be made therein without departing from the scope as defined by the following claims.

**Claims**

1.    A nickel-based active material for a lithium secondary battery, the nickel-based active material comprising a secondary particle that comprises an agglomerate of at least two plate primary particles, wherein at least a part of the secondary particle has a structure in which the plate primary particles are arranged radially, and an exterior portion of the secondary particle has a porosity greater than that of an interior portion of the secondary particle;
      wherein a porosity of the exterior portion of the secondary particle is in a range of 5% to 30%; and
      wherein the exterior portion of the secondary particle is a region of about 40 length% from a surface of the secondary particle based on the total distance from a center to the surface of the secondary particle.

2.    A nickel-based active material according to claim 1, wherein a porosity of the interior portion of the secondary particle is 10% or less.

3.    A nickel-based active material according to claim 1 or claim 2, wherein a pore size of the interior portion of the secondary particle is 150 nm or less, and a pore size of the exterior portion of the secondary particle is in a range of 150 nm to 550 nm.

4.    A nickel-based active material according to any one of claims 1 to 3 comprising the secondary particle in which longitudinal axes of the plate primary particles are arranged radially.

5.    A nickel-based active material according to any one of claims 1 to 4, wherein the plate primary particles have an average length in a range of 150 nm to 500 nm and an average thickness in a range of 100 nm to 200 nm, and a ratio of the average thickness and the average length is in a range of 1:2 to 1:5.

6. A nickel-based active material according to any one of claims 1 to 5, wherein the nickel-based active material is an active material represented by Formula 1:

Formula 1    $Li_a(Ni_{1-x-y-z}Co_xMn_yM_z)O_2$

wherein, in Formula 1,

M is an element selected from the group consisting of boron (B), magnesium (Mg), calcium (Ca), strontium (Sr), barium (Ba), titanium (Ti), vanadium (V), chrome (Cr), iron (Fe), copper (Cu), zirconium (Zr), and aluminium (Al); and
$1.0 \leq a \leq 1.3$, $x \leq (1-x-y-z)$, $y \leq (1-x-y-z)$, $0 < x < 1$, $0 \leq y < 1$, and $0 \leq z < 1$.

7. A nickel-based active material according to claim 6, wherein $1.0 \leq a \leq 1.3$, $0 < x \leq 0.33$, $0 \leq y \leq 0.5$, $0 \leq z \leq 0.05$, and $0.33 \leq (1-x-y-z) \leq 0.95$.

8. A nickel-based active material according to any one of claims 1 to 7, wherein, in the nickel-based active material, an amount of nickel is in a range of 33 mol% to 95 mol% based on the total amount of transition metals (Ni, Co, and Mn), the amount of nickel is greater than an amount of manganese, and the amount of nickel is greater than an amount of cobalt.

9. A nickel-based active material according to any one of claims 1 to 8, wherein, the nickel-based active material is $LiNi_{0.6}Co_{0.2}Mn_{0.2}O_2$, $LiNi_{0.5}Co_{0.2}Mn_{0.3}O_2$, $LiNi_{0.33}Co_{0.33}Mn_{0.33}O_2$, $LiNi_{0.8}Co_{0.1}Mn_{0.1}O_2$, or $LiNi_{0.85}Co_{0.1}Al_{0.05}O_2$.

10. A method of preparing a nickel-based active material for a lithium secondary battery, the method comprising:

low-temperature heat-treating a mixture of a lithium precursor and a metal hydroxide under an oxidative gas atmosphere at a temperature in a range of 650°C to 800°C; and
high-temperature heat-treating the low-temperature heat-treated mixture at a temperature in a range of 800°C to 1000°C to prepare the nickel-based active material according to any one of claims 1 to 9.

11. A method according to claim 10, wherein the low-temperature heat-treating is performed under an oxygen or air atmosphere at a temperature in a range of 700°C to 800°C.

12. A method according to claim 10 or claim 11, wherein the high-temperature heat-treating is performed under an oxygen atmosphere at a temperature in a range of 850°C to 900°C.

13. A method according to any one claims 10 to 12, wherein the metal hydroxide is a compound represented by Formula 2:

Formula 2    $(Ni_{1-x-y-z}Co_xMn_yM_z)(OH)_2$

wherein, in Formula 2,

M is an element selected from the group consisting of boron (B), magnesium (Mg), calcium (Ca), strontium (Sr), barium (Ba), titanium (Ti), vanadium (V), chrome (Cr), iron (Fe), copper (Cu), zirconium (Zr), and aluminium (Al); and
$x \leq (1-x-y-z)$, $y \leq (1-x-y-z)$, $0 < x < 1$, $0 \leq y < 1$, and $0 \leq z < 1$.

14. A lithium secondary battery comprising
a positive electrode comprising the nickel-based active material according to any one of claims 1 to 9;
a negative electrode; and
an electrolyte between the positive electrode and the negative electrode.

**Patentansprüche**

1. Nickelbasiertes Aktivmaterial für eine Lithiumsekundärbatterie, wobei das nickelbasierte Aktivmaterial einen Sekundärpartikel beinhaltet, welcher ein Agglomerat aus mindestens zwei Platten-Primärpartikeln beinhaltet, wobei mindestens ein Teil des Sekundärpartikels eine Struktur besitzt, in welcher die Platten-Primärpartikel radial angeordnet sind, und ein äußerer Abschnitt des Sekundärpartikels eine Porosität besitzt, welcher größer als diejenige eines inneren Abschnittes des Sekundärpartikels ist;
wobei eine Porosität des äußeren Abschnittes des Sekundärpartikels in einem Bereich von 5 % bis 30 % liegt; und wobei der äußere Abschnitt des Sekundärpartikels einen Bereich von ungefähr 40 Längenprozent einer Oberfläche des Sekundärpartikels, basierend auf dem Gesamtabstand zwischen einem Mittelpunkt zu der Oberfläche des Sekundärpartikels, darstellt.

2. Nickelbasiertes Aktivmaterial nach Anspruch 1, bei welchem eine Porosität des inneren Abschnittes des Sekundärpartikels 10 % oder darunter beträgt.

3. Nickelbasiertes Aktivmaterial nach Anspruch 1 oder 2, bei welchem eine Porengröße des inneren Abschnittes des Sekundärpartikels 150 nm oder darunter beträgt, und eine Porengröße des äußeren Abschnittes des Sekundärpartikels in einem Bereich von 150 nm bis 550 nm liegt.

4. Nickelbasiertes Aktivmaterial nach einem der Ansprüche 1 bis 3, welches den Sekundärpartikel beinhaltet, bei welchem Längsachsen des Platten-Primärpartikels radial angeordnet sind.

5. Nickelbasiertes Aktivmaterial nach einem der Ansprüche 1 bis 4, bei welchem die Platten-Primärpartikel eine mittlere Länge in einem Bereich von 150 nm bis 500 nm und eine mittlere Dicke in einem Bereich von 100 nm bis 200 nm besitzen, und ein Verhältnis zwischen der mittleren Dicke und der mittleren Länge in einem Bereich von 1:2 bis 1:5 liegt.

6. Nickelbasiertes Aktivmaterial nach einem der Ansprüche 1 bis 5, bei welchem das nickelbasierte Aktivmaterial ein Aktivmaterial ist, welches durch Formel 1 dargestellt wird:

$$\text{Formel 1} \qquad Li_a(Ni_{1-x-y-z}Co_xMn_yM_z)O_2$$

wobei, in Formel 1,
M ein Element ist, gewählt aus der Gruppe, bestehend aus Bor (B), Magnesium (Mg), Kalzium (Ca), Strontium (Sr), Barium (Ba), Titan (Ti), Vanadium (V), Chrom (Cr), Eisen (Fe), Kupfer (Cu), Zirkon (Zr) und Aluminium (Al); und

$$1{,}0 \leq a \leq 1{,}3,\ x \leq (1-x-y-z),\ y \leq (1-x-y-z),\ 0 < x < 1, 0 \leq y < 1 \text{ und } 0 \leq z < 1.$$

7. Nickelbasiertes Aktivmaterial nach Anspruch 6, bei welchem $1{,}0 \leq a \leq 1{,}3$, $0 < x \leq 0{,}33$, $0 \leq y \leq 0{,}5$, $0 \leq z < 0{,}05$ und $0{,}33 \leq (1-x-y-z) \leq 0{,}95$.

8. Nickelbasiertes Aktivmaterial nach einem der Ansprüche 1 bis 7, bei welchem, in dem nickelbasierten Aktivmaterial, eine Menge an Nickel in einem Bereich von 33 Molprozent bis 95 Molprozent basierend auf der Gesamtmenge an Übergangsmetallen (Ni, Co und Mn) beträgt,
die Menge an Nickel größer ist als eine Menge an Mangan, und
die Menge an Nickel größer ist als eine Menge an Kobalt.

9. Nickelbasiertes Aktivmaterial nach einem der Ansprüche 1 bis 8, bei welchem das nickelbasierte Aktivmaterial $LiNi_{0,6}Co_{0,2}Mn_{0,2}O_2$, $LiNi_{0,5}Co_{0,2}Mn_{0,3}O_2$, $LiNi_{0,33}Co_{0,33}Mn_{0,33}O_2$, $LiNi_{0,8}Co_{0,1}Mn_{0,1}O_2$, oder $LiNi_{0,85}Co_{0,1}Al_{0,05}O_2$ ist.

10. Verfahren zur Zubereitung eines nickelbasierten Aktivmaterials für eine Lithiumsekundärbatterie, wobei das Verfahren Folgendes beinhaltet:

Niedertemperatur-Wärmebehandeln einer Mischung aus einem Lithiumvorläufer und einem Metallhydroxid unter einer oxidativen Gasatmosphäre bei einer Temperatur in einem Bereich von 650°C bis 800°C; und Hochtemperatur-Wärmebehandeln der mit Niedertemperatur wärmebehandelten Mischung bei einer Temperatur in einem Bereich von 800°C bis 1000°C zum Zubereiten des nickelbasierten Aktivmaterials nach einem der Ansprüche 1 bis 9.

11. Verfahren nach Anspruch 10, bei welchem die Niedertemperatur-Wärmebehandlung unter einer Sauerstoff- oder Luftatmosphäre bei einer Temperatur in einem Bereich von 700°C bis 800°C durchgeführt wird.

**12.** Verfahren nach Anspruch 10 oder 11, bei welchem die Hochtemperatur-Wärmebehandlung unter einer Sauerstoffatmosphäre bei einer Temperatur in einem Bereich von 850°C bis 900°C durchgeführt wird.

**13.** Verfahren nach einem der Ansprüche 10 bis 12, bei welchem das Metallhydroxid eine Verbindung ist, welche durch Formel 2 dargestellt wird:

$$\text{Formel 2} \qquad (Ni_{1-x-y-z}Co_xMn_yM_z)(OH)_2$$

wobei, in Formel 2,
M ein Element ist, gewählt aus der Gruppe, bestehend aus Bor (B), Magnesium (Mg), Kalzium (Ca), Strontium (Sr), Barium (Ba), Titan (Ti), Vanadium (V), Chrom (Cr), Eisen (Fe), Kupfer (Cu), Zirkon (Zr) und Aluminium (Al); und

$$x \leq (1-x-y-z), \ y \leq (1-x-y-z), \ 0 < x < 1, \ 0 \leq y < 1, \ \text{und} \ 0 \leq z < 1.$$

**14.** Lithiumsekundärbatterie, Folgendes beinhaltend:

eine positive Elektrode, beinhaltend das nickelbasierte Aktivmaterial nach einem der Ansprüche 1 bis 9;
eine negative Elektrode; und
ein Elektrolyt zwischen der positiven Elektrode und der negativen Elektrode.

## Revendications

**1.** Matériau actif à base de nickel pour une batterie secondaire au lithium, le matériau actif à base de nickel comprenant une particule secondaire qui comprend un aggiomérat d'au moins deux particules primaires de plaque, dans lequel au moins une partie de la particule secondaire présente une structure dans laquelle les particules primaires de plaque sont agencées de manière radiale, et une partie extérieure de la particule secondaire présente une porosité supérieure à celle d'une partie intérieure de la particule secondaire ;
dans lequel une porosité de la partie extérieure de la particule secondaire est dans la plage comprise entre 5 % et 30 % ; et
dans lequel la partie extérieure de la particule secondaire est une région d'environ 40 % en longueur par rapport à une surface de la particule secondaire, sur la base de la distance totale entre un centre et la surface de la particule secondaire.

**2.** Matériau actif à base de nickel selon la revendication 1, dans lequel une porosité de la partie intérieure de la particule secondaire est de 10 % ou moins.

**3.** Matériau actif à base de nickel selon la revendication 1 ou 2, dans lequel une taille de pore de la partie intérieure de la particule secondaire est de 150 nm ou moins, et une taille de pore de la partie extérieure de la particule secondaire est dans une plage comprise entre 150 nm et 550 nm.

**4.** Matériau actif à base de nickel selon l'une quelconque des revendications 1 à 3, comprenant la particule secondaire dans laquelle des axes longitudinaux des particules primaires de la plaque sont agencés de manière radiale.

**5.** Matériau actif à base de nickel selon l'une quelconque des revendications 1 à 4, dans lequel les particules primaires de plaque présentent une longueur moyenne dans une plage comprise entre 150 nm et 500 nm et une épaisseur moyenne dans une plage comprise entre 100 nm et 200 nm, et un rapport entre l'épaisseur moyenne et la longueur moyenne est compris dans une plage comprise entre 1:2 et 1:5.

**6.** Matériau actif à base de nickel selon l'une quelconque des revendications 1 à 5, dans lequel le matériau actif à base de nickel est un matériau actif représenté par la Formule 1 :

$$\text{Formule 1} \qquad Li_a(Ni_{1-x-y-z}Co_xMn_yM_z)O_2$$

dans laquelle, dans la Formule 1,
M est un élément choisi dans le groupe constitué de bore (B), de magnésium (Mg), de calcium (Ca), de strontium (Sr), de baryum (Ba), de titane (Ti), de vanadium (V), de chrome (Cr), de fer (Fe), de cuivre (Cu), de zirconium (Zr), et d'aluminium (Al) ; et

$$1{,}0 \leq a \leq 1{,}3,\ x \leq (1-x-y-z),\ y \leq (1-x-y-z),\ 0 < x < 1,\ 0y < 1,\ \text{et } 0 \leq z < 1.$$

**7.** Matériau actif à base de nickel selon la revendication 6, dans lequel $1{,}0 \leq a \leq 1{,}3$, $0 < x \leq 0{,}33$, $0 \leq y \leq 0{,}5$, $0 \leq z \leq 0{,}05$, et $0{,}33 \leq (1-x-y-z) \leq 0{,}95$.

**8.** Matériau actif à base de nickel selon l'une quelconque des revendications 1 à 7, dans lequel, dans le matériau actif à base de nickel, une quantité de nickel est dans une plage comprise entre 33 % en moles et 95 % en moles, sur la base de la quantité totale de métaux de transition (Ni, Co et Mn), la quantité de nickel est supérieure à une quantité de manganèse, et la quantité de nickel est supérieure à une quantité de cobalt.

**9.** Matériau actif à base de nickel selon l'une quelconque des revendications 1 à 8, dans lequel le matériau actif à base de nickel est le $LiNi_{0,6}Co_{0,2}Mn_{0,2}O_2$, $LiNi_{0,5}Co_{0,2}Mn_{0,3}O_2$, $LiNi_{0,33}Co_{0,33}Mn_{0,33}O_2$, $LiNi_{0,8}Co_{0,1}Mn_{0,1}O_2$, ou $LiNi_{0,85}Co_{0,1}Al_{0,05}O_2$.

**10.** Procédé de préparation d'un matériau actif à base de nickel pour une batterie secondaire au lithium, le procédé comprenant :

un traitement thermique à basse température d'un mélange d'un précurseur de lithium et d'un hydroxyde métallique sous une atmosphère de gaz oxydatif à une température dans une plage comprise entre 650°C et 800°C ; et
un traitement thermique à haute température du mélange traité thermiquement à basse température à une température comprise dans une plage de 800°C à 1000°C permettant de préparer le matériau actif à base de nickel selon l'une quelconque des revendications 1 à 9.

**11.** Procédé selon la revendication 10, dans lequel le traitement thermique basse température est réalisé sous une atmosphère d'oxygène ou d'air à une température comprise dans une plage comprise entre 700°C et 800°C.

**12.** Procédé selon la revendication 10 ou 11, dans lequel le traitement thermique à haute température est effectué sous une atmosphère d'oxygène à une température comprise dans une plage comprise entre 850°C et 900°C.

**13.** Procédé selon l'une quelconque des revendications 10 à 12, dans lequel l'hydroxyde métallique est un composé représenté par la Formule 2 :

Formule 2 $\qquad (Ni_{1-x-y-z}Co_xMn_yM_z)(OH)_2$

dans lequel, dans la Formule 2,
M est un élément choisi dans le groupe constitué de bore (B), de magnésium (Mg), de calcium (Ca), de strontium (Sr), de baryum (Ba), de titane (Ti), de vanadium (V), de chrome (Cr), de fer (Fe), de cuivre (Cu), de zirconium (Zr), et d'aluminium (Al) ; et

$$x \leq (1-x-y-z),\ y \leq (1-x-y-z),\ 0 < x < 1,\ 0 \leq y < 1,\ \text{et } 0 \leq z < 1.$$

**14.** Batterie secondaire au lithium comprenant
une électrode positive comprenant le matériau actif à base de nickel selon l'une quelconque des revendications 1 à 9,
une électrode négative ; et
un électrolyte entre l'électrode positive et l'électrode négative.

# FIG. 1A

(A)  (B)  (C)

# FIG. 1B

# FIG. 1C

PLATE
PRIMARY PARTICLE

PLANE

13

t

R    Li⁺

10

12

14

NICKEL-BASED ACTIVE MATERIAL
SECONDARY PARTICLE

# FIG. 2

FIG. 3A

FIG. 3B

FIG. 4A

FIG. 4B

# FIG. 5A

# FIG. 5B

## FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016181597 A1
- US 2012270107 A1
- EP 3007254 A1